# EUROPEAN PATENT SPECIFICATION

(11) **EP 1 667 073 B1**
(45) Date of publication and mention of the grant of the patent: **16.12.2009**
(21) Application number: 04022131.9
(22) Date of filing: 17.09.2004
(51) Int. Cl.: G07D 7/08

(54) **Security document with microsphere inclusions**
Sicherheitdokument mit mikrosphärischen Einschlüssen
Document de sécurité avec inclusions micro-sphériques

(43) Date of publication of application: 07.06.2006
(73) Proprietor: European Central Bank, 60311 Frankfurt am Main (DE)
(72) Inventor:
(74) Representative: Luderschmidt, Schüler & Partner

(56) References cited:
- EP-A- 0 364 029
- EP-A- 1 316 924
- WO-A-02/46528
- US-A- 5 974 150

## Description

### Background of the invention

The present invention generally relates to security documents, but particularly to banknotes having a polymer-based or paper-based substrate, said security documents comprising microsphere inclusions, and a method for detecting microsphere inclusions, using ultrasonic (UT) inspection techniques.

A lot of effort has been put into the development of security documents. The identification and/or authentication of banknotes is a long-standing problem. In order to solve this goal, security means for banknotes have been developed and are being developed to allow users and/or machines to discriminate among genuine and forged banknotes and/or to discriminate among different values of banknotes, using special papers, special inks and patterns, the inclusion of watermarks and security threads.

The application of ultrasonic (UT) inspection techniques is widely spread in industrial and medical fields, using waves with frequencies above 20 kHz.

In the industrial field ultrasonic (UT) inspection techniques are used as nondestructive techniques to detect, locate and size inclusions or defects in various raw materials or finished mechanical products of those industrial sectors, where safety is of importance. Such industrial sectors are for example the nuclear power, the aviation and the space industry, and the automobile industry. An appropriate measurement acquisition related analysis software enables the imaging of such inclusions or defects.

In the medical field ultrasonic inspection techniques are used for imaging organs and tissues within the human body.

In both cases the imaging is accomplished by acoustic reflections originating from objects within the examined body.

The idea of exposing objects to ultrasonic waves is to examine their response to ultrasound. Propagation of ultrasonic waves within a medium is greatly influenced by the presence of what is called microsphere inclusions in the acoustic path, being of a gaseous, liquid or solid core medium.

Generally speaking, microsphere inclusions within materials are efficient scatterer of ultrasound. Even small microsphere inclusions as small as a few microns (1 micron ≡ 0.001 mm), particularly gaseous microsphere inclusions, strongly scatter ultrasound waves utilised for an ultrasonic examination. This is due primarily to the compressibility of gaseous or liquid microsphere inclusions.

In particular, gaseous microsphere inclusions are very compressible, and can grossly change their shape in response when exposed to ultrasound.

Gaseous microsphere inclusions represent a strongly resonance system, and the resonance condition is primarily governed by the size of said gaseous mircrosphere inclusions, and the wavelength of the applied ultrasound waves.

The acoustic scattering cross-section of these mircrosphere inclusions at resonance may be many orders of magnitude greater than the geometrical cross-section, being the reason for the increase in reflection of applied ultrasound waves. This increase in reflection is accompanied by an increase in the attenuation of the ultrasound waves.

According to the above mentioned, it can be said that the detailed characteristics of the acoustic propagation of ultrasonic waves within a particular medium is governed by the properties of any small microsphere inclusions, and also their relative size distribution, within the acoustic path.

Due to their compressibility, gaseous or liquid microsphere inclusions under certain conditions can undergo what is called acoustic cavitation, hereby oscillating in response to pressure variations of the applied acoustic field, wherein the radius of microsphere inclusions, assuming them as micro-bubbles, increases and decreases. Under these conditions, the microsphere inclusions themselves emit sound waves which provide information about the dynamics of their motion, which is highly nonlinear. The oscillations of the microsphere inclusions in the megahertz ultrasonic field generate distinct harmonics, for example being the second, third or a higher harmonic of the microsphere inclusions that can be detected as the acoustic emission signature of said microsphere inclusions.

WO 02/46528 A1 describes a security feature that is used with a substrate. The document discloses the approach for enhancing the security of documents by including fluorescent micro-particles in a coating to the substrate.

It is an object of the present invention to improve the standard of security documents, particularly banknotes having polymer-based or paper-based substrates, by providing new security attributes.

It is another object of the invention to provide a method for detecting the presence of security attributes within security documents, particularly within banknotes having polymer-based or paper-based substrates.

This object is solved with the features of claim 1. Preferred embodiments are the subject matter of the dependent claims.

The invention takes advantage of specific acoustic characteristics of microsphere inclusions for the purpose of pressing ahead with the development of security documents, particularly banknotes, in order to make security documents unique and difficult to be illegally copied.

Furthermore, an inspection method needs to be provided for detecting said microsphere inclusions establishing the authenticity of security documents doped with said microsphere inclusions. For this purpose ultrasonic (UT) inspection techniques are taken into consideration, using ultrasonic waves for detecting security attributes comprising specific predetermined acoustic characteristics.

According to a preferred embodiment of the invention, a security document comprising security attributes being disposed in the document is provided with a layer of material doped with microsphere inclusions of different sizes, having a predetermined size distribution, concentration, and spacial positioning, in order to be uniquely discriminable by its measurable response when exposed to ultrasound waves. The layer of material is embedded between two or more layers of the security document, and is positioned in a distinct location of the security document, the embedding is accomplished in such a way that microsphere inclusions are free to oscillate in the applied ultrasonic field. The microsphere inclusions being of a gaseous or a liquid core medium are enveloped by a shell medium being the matrix medium. With respect to the necessity of a unique discriminable, and measurable response of the security document when exposed to ultrasound waves, due to its specific acoustic characteristics, the configuration of microsphere inclusions may preferably be provided reproducibly.

To avoid the possibility of the microsphere inclusions being crushed, and to increase the working life of the banknote, the microsphere inclusions are mixed with solid particles.

In an alternative preferred embodiment of the invention, the document is provided with different layers of material doped with microsphere inclusions of different sizes having a configuration of predetermined size distribution, spacial positioning, and concentration, wherein said layers of material are positioned in distinct locations of the security document, and said layers of material having different configurations of microsphere inclusions with respect to size distribution, spacial positioning, and concentration.

In another preferred embodiment of the invention the security document is a banknote comprising a polymer-based or paper-based substrate, wherein the matrix medium of the microsphere inclusions is the fabric of a polymer-based or paper-based substrate.

In another preferred embodiment of the invention the security document is a banknote comprising a polymer-based or paper-based substrate, wherein the matrix medium of the microsphere inclusions is the ink on a polymer-based or paper-based substrate.

According to the invention, the method for monitoring the identification and/or authentication of security documents comprising different locations of the document with specific patterns, or specialized motifs having predetermined configurations of microsphere inclusions, comprises two different techniques, covering a span of frequencies.

The testing method can be undertaken on a static plate, exposing said microsphere inclusions to ultrasound statically, or exposing said microsphere inclusions to ultrasound dynamically whilst the security document is moving.

The response of the embedded microsphere inclusions to ultrasound exposure is considered to be an unique one, due to the predetermined configurations of microsphere inclusions and their acoustic properties, enabling the identification and/or authentication of security documents.

According to the first method, the response of microsphere inclusions to ultrasound can be monitored by measuring the harmonic generation from the pulsating microsphere inclusions in the case of acoustic cavitation, wherein the harmonic generation refers to the second, third or higher harmonics generated from the pulsating microsphere inclusions.

Thereby, the first method involves transmitting ultrasound from a small piezoelectric transducer, or any other ultrasound source, in a narrow frequency band at, for example, 2 MHz and detecting the signal generated by the oscillating microsphere inclusions at, for example 4 MHz. The detector can simply be a narrow band receiver that senses the presence of a 4 MHz signal. Normal reflections and scattering of the incident ultrasound waves at 2 MHz are rejected by the narrow bandwidth of the receiver and only signals from microsphere inclusions would give a detectable signal.

Alternatively, heterodyne techniques can be used to detect changes of frequency caused by movement of the banknote (Doppler effect). Depending on signal strength and distance between the transducer and the banknote, it is possible to use the third harmonic, i.e. 6 MHz, or possibly higher frequencies. Conversely, for greater range one might select a lower excitation frequency in combination with microsphere inclusions having larger diameter.

According to the second method, the response of microsphere inclusions to ultrasound is monitored by measuring the pulse-echo (single transducer) or/and the through-transmission (two transducers) of an incident acoustic wave, during a diagnostic test.

Alternatively, a diagnostic test using the frequency shift detected when the banknote is moving by applying Doppler based techniques is applicable.

In the pulse-echo method, a piezoelectric transducer with its longitudinal axis located perpendicular to and mounted on or near the surface of the banknote is used to transmit and receive ultrasonic energy. The ultrasonic waves are reflected by the opposite face of the security document and the microsphere inclusions, and received by the same transducer where the reflected energy is converted into an electrical signal.

In the trough-transmission method, an ultrasonic transmitter is used on one side of the material while a detector is placed on the opposite side. Exposing the security document to ultrasound using this method will alternatively result in the detection of microsphere inclusions.

In any of the above mentioned cases the received electrical signals are computer processed for display on a computer monitor.

The sensitivity of the second method depends on the existence of a large insertion loss relative to the forged and un-doped banknote. This can be optimised through a refinement of the configuration of microsphere inclusions with respect to their size distribution, matrix medium and applied frequency. The distinct areas of the banknote doped with microsphere inclusions substantially attenuate ultrasound, thereby providing the diagnostic test distinguishing between a valid banknote and a forgery. Such an application requires the use of ultrasound at high frequencies.

Using this second method, a range of diagnostic tests are imaginable, including tests, simply confirming high ultrasonic attenuation in the banknote, or more detailed tests requiring more advanced processing and diagnostic capability for determining the spectral content of the reflected and/or transmitted waveforms, identifying the frequency dependent attenuation along with any resonances.

The detected response of the microsphere inclusions is compared with anticipated values of reference samples with predetermined patterns for identification and/or authentication of the security document and/or assessing the quality of the microsphere inclusions.

Due to the inherently high absorption of ultrasound in air, the transducers used to transmit and receive the relevant acoustic signals, are positioned very close to or mounted on the surface of the banknote, to overcome said absorption in air.

Alternatively, the ultrasound can be introduced in the banknote through a coupling medium, such as a rubber roller.

In a preferred method of the invention for detecting microsphere inclusions arrays of transducers can be used to simultaneously test several locations of the banknote.

In another preferred method of the invention a multiple frequency excitation/detection system is provided, enabling multiple testing of differently configured locations of the banknote with microsphere inclusions, wherein the ratio of the received signals being dependent on the original doping strength may be used as a criterion of control.

For the purpose of illustrating the present invention, there is shown in the accompanying schematic drawing an embodiment which is presently preferred, it being understood that the invention is not limited to the illustration shown.
- Fig. 1: A view of a banknote comprising different locations of the same note being doped to different extents, and comprising different patterns with different configurations of microsphere inclusions,
- Fig. 2: a schematic cross-sectional view of a banknote comprising different locations of the same note being doped to different extents, and comprising different patterns with different configurations of microsphere inclusions,
- Fig. 3: a schematic view of a possible configuration of microsphere inclusions in a matrix medium within a security document, being exposed to incident acoustic waves, and
- Fig. 4: a schematic view of a possible multiple excitation/detection method for detecting configurations of microsphere inclusions in a matrix medium within a security document, being exposed to incident acoustic waves.

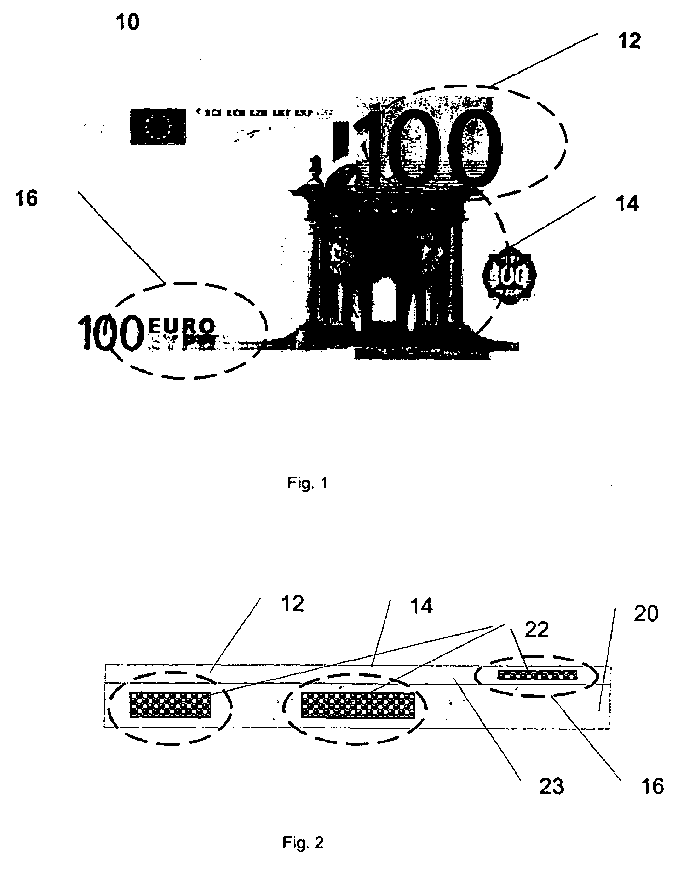

Fig. 1 shows a view of the front side of a banknote 10 comprising a polymer-based or paper-based substrate 20 being provided with a graphical printing design. In addition to established security means, such as a security thread made of a metal strip and a hologram, the banknote 10 comprises different locations 12, 14, 16 on the polymer-based or paper-based substrate 20 being doped to different extents with microsphere inclusions 22, including different patterns with different configurations of said microsphere inclusions, wherein said microsphere inclusions 22 are provided with a layer of material 18 embedded in the polymer-based or paper-based substrate 20.

The above described embodiment of a banknote 10 is used as follows. Due to the different patterns of uniquely configured microsphere inclusions 22 being of a gaseous core medium positioned in different locations 12, 14, 16 of the banknote 10, said banknote 10 is discriminable among forged banknotes. Therefore, the above described banknote 10 is exposed to ultrasound for the purpose of examining the specific and unique response of said microsphere inclusions 22. As a result of the acoustic properties of said microsphere inclusions 22 the propagation of ultrasonic waves introduced into the banknote 10 will be greatly influenced.

The discrimination among other banknotes is enabled by using two different testing techniques for monitoring the unique response of said microsphere inclusions 22 to ultrasound exposure, due to their uniquely configured properties, wherein the response of said microsphere inclusions 22 is monitored by measuring either the harmonic generation from the pulsating microsphere inclusions 22 or the pulse-echo or/and the through-transmission of an incident acoustic wave, thereby enabling the monitoring of predetermined patterns for identification and/or authentication of security documents. The testing method can be undertaken on a static plate, exposing said microsphere inclusions 22 to ultrasound statically not moving the security document 10, or exposing said microsphere inclusions 22 to ultrasound dynamically whilst the security document 10 is moving.

Fig. 2 shows a schematic cross-sectional view of a banknote 10 comprising a polymer-based or paper-based substrate 20 and different locations 12, 14, 16 of the same note being doped to different extents, and comprising different patterns with different configurations of gaseous microsphere inclusions 22 being either enveloped by a layer of material 18 embedded within the polymer-based or paper-based substrate 20 of the banknote 10, or by the ink of the banknote 10.

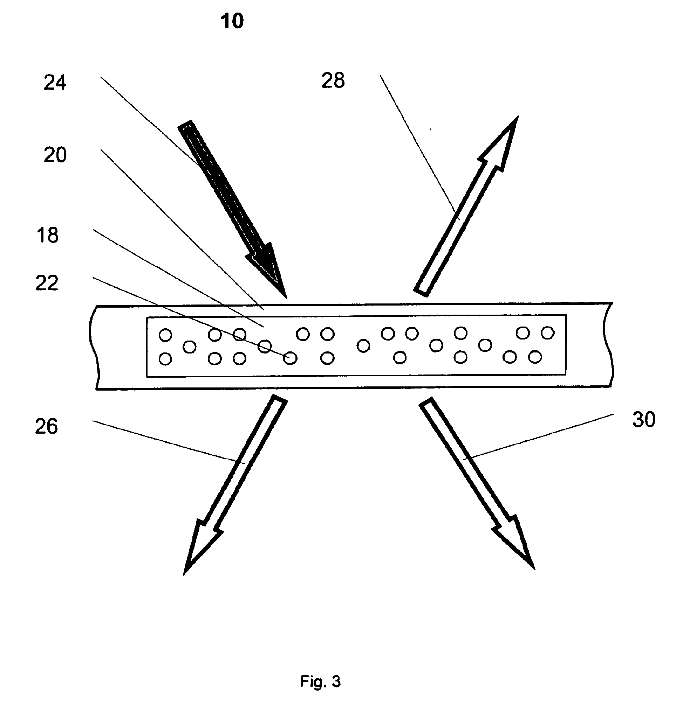

Fig. 3 shows a schematic view of a configuration of microsphere inclusions 22 being of a gaseous core medium embedded in a matrix medium 18 within a security document 10, particularly a banknote, comprising a polymer-based or paper-based substrate 20. Due to the specific acoustic characteristics of the microsphere inclusions 22, the response to ultrasound exposure 24 can be monitored using two different inspection techniques, wherein, depending on the applied method, the response of the microsphere inclusions 22 to ultrasound exposure is monitored by measuring either the harmonic generation 26 from the pulsating microsphere inclusions 22 or the pulse-echo 28 or/and the through-transmission 30 of incident acoustic waves 24.

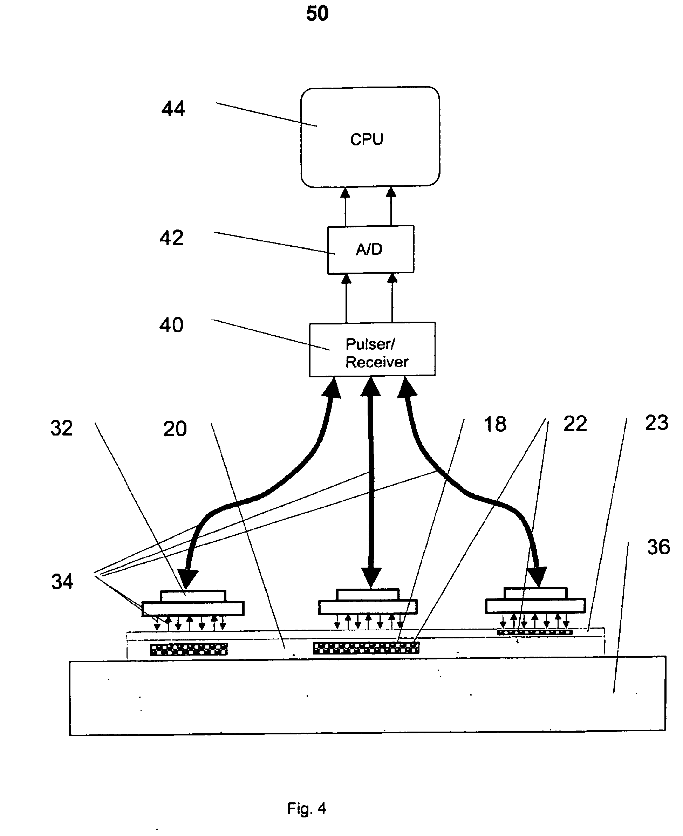

Fig. 4 shows a schematic view of a multiple excitation/detection method 50 using the pulse-echo method for detecting simultaneously several configurations of microsphere inclusions 22 within a matrix medium 18 of a security document 10, particularly a banknote 10, comprising a polymer-based or paper-based substrate 20, different locations 12, 14, 16 of the same note being doped to different extents, and comprising different patterns with different configurations of microsphere inclusions 22. For this purpose, several transducers 32 are placed on the security document 10 for sending and receiving signals 34. A pulser-receiver 40 unit generates the signals to be introduced in the security document 10 and receives the reflected signals to be processed and evaluated by a computer 44 after passing an A/D converter 42. The plate on which the security document 10 is placed can be used statically not moving said plate or dynamically by moving said plate, thus moving the security document 10.

## Claims

1. Security document comprising security attributes, said security attributes being microsphere inclusions (22) disposed in the security document, said microsphere inclusions (22) having a predetermined acoustic response to an ultrasound exposure, **characterized in that** said microsphere inclusions (22) have a liquid or gaseous core medium.

2. Security document according to claim 1, wherein said microsphere inclusions (22) are provided by a layer of material (18) doped with microsphere inclusions (22) of different sizes comprising a core medium being enveloped by a shell medium.

3. Security document according to claim 2, wherein said microsphere inclusions (22) are provided with a predetermined size distribution within said layer of material (18).

4. Security document according to claim 2 or 3, wherein said microsphere inclusions (22) are provided with a predetermined spatial positioning within said layer of material (18).

5. Security document according to one of claims 2 to 4, wherein said microsphere inclusions (22) are provided with a predetermined concentration within said layer of material (18).

6. Security document according to one of claims 1 to 5, wherein reproducible microsphere inclusions (22) are provided.

7. Security document according to one of claims 2 to 6, wherein said shell medium is a matrix medium (18).

8. Security document according to claim 7, wherein said matrix medium (18) is embedded between two or more layers of the security document.

9. Security document according to claim 7 or 8, wherein said matrix medium (18) is the fabric of a polymer-based or paper-based substrate.

10. Security document according to claim 7 or 8, wherein said matrix medium (18) is the ink on a substrate.

11. Security document according to one of claims 1 to 10, wherein said security document is a banknote comprising a polymer-based or paper-based substrate.

12. Security document according to one of claims 1 to 10, wherein said security document is a sheet of paper.

13. Security document according to one of claims 1 to 12, wherein different locations of said security document are provided with a layer of material (18) doped with microsphere inclusions (22).

14. Security document according to claim 13, wherein said locations of the security document, comprising a layer of material (18) with microsphere inclusions (22) are modified to different extents, having specific configurations of microsphere inclusions (22).

15. Security document according to claim 14, wherein said locations of the security document, comprising a layer of material (18) with microsphere inclusions (22) are provided with different patterns.

16. Security document according to one of claims 1 to 15, **characterized in that** said microsphere inclusions (22) are mixed with solid particles for providing a protective surrounding for the microsphere inclusions (22) and increasing the working life of the security document.

17. Method for monitoring the identification and/or authentication of
security documents according to one of claims 1 to 16:
Exposing the microsphere inclusions (22) to ultrasound (24), and
Detecting the response (28; 30) of the microsphere inclusions (22) to ultrasound exposure (24).

18. Method according to claim 17, wherein the response (28; 30) of the microsphere inclusions (22) to ultrasound exposure (24) is monitored by measuring the harmonic generation (26) from the pulsating microsphere inclusions (22).

19. Method according to claim 17, wherein the response (28; 30) of the microsphere inclusions (22) to ultrasound exposure (24) is monitored by measuring the pulse-echo (28) or/and the through-transmission (30) of an incident acoustic wave (24).

20. Method according to claim 19, wherein the detected response (28; 30) of the microsphere inclusions (22) is compared with those of reference samples with predetermined patterns for identification and/or authentication of the security document and/or assessing the quality of the microsphere inclusions (22).

21. Method according to one of claims 17 to 20, wherein said microsphere inclusions (22) are exposed to ultrasound (24) statically using a static plate (36).

22. Method according to one of claims 17 to 20 wherein said microsphere inclusions (22) are exposed to ultrasound (24) dynamically whilst the security document is moving.

23. Method according to one of claims 17 to 22, wherein a multiple excitation/detection system (50) is provided for monitoring the identification and/or authentication of microsphere inclusions (22) of different locations of the security document simultaneously, using more than one transducer (32) for providing resonances at different frequencies at the same time, according to the different configurations of microsphere inclusions (22) within said locations of the security document.

## Patentansprüche

1. Sicherheitsdokument, das Sicherheitsmerkmale umfasst, wobei die Sicherheitsmerkmale in dem Sicherheitsdokument angeordnete mikrospherische Einschlüsse (22) sind, wobei die mikrospherischen Einschlüsse (22) auf eine Ultraschallexposition eine vorgegebene akustische Reaktion aufweisen, **dadurch gekennzeichnet, dass** die mikrospherischen Einschlüsse (22) ein flüssiges oder gasförmiges Kemmedium aufweisen.

2. Sicherheitsdokument nach Anspruch 1, bei dem die mikrospherischen Einschlüsse (22) durch eine Schicht aus einem Material (18) vorgesehen sind, dem mikrospherische Einschlüsse (22) unterschiedlicher Größen beigemischt sind, die ein Kernmedium umfassen, das von einem Mantelmedium umhüllt ist.

3. Sicherheitsdokument nach Anspruch 2, bei dem die mikrospherischen Einschlüsse (22) innerhalb der Materialschicht (18) mit einer vorgegebenen Größenverteilung vorgesehen sind.

4. Sicherheitsdokument nach Anspruch 2 oder 3, bei dem die mikrospherischen Einschlüsse (22) innerhalb der Materialschicht (18) mit einer vorgegebenen räumlichen Positionierung vorgesehen sind.

5. Sicherheitsdokument nach einem der Ansprüche 2 bis 4, bei dem die mikrospherischen Einschlüsse (22) innerhalb der Materialschicht (18) mit einer vorgegebenen Konzentration vorgesehen sind.

6. Sicherheitsdokument nach einem der Ansprüche 1 bis 5, bei dem reproduzierbare mikrospherische Einschlüsse (22) vorgesehen sind.

7. Sicherheitsdokument nach einem der Ansprüche 2 bis 6, bei dem das Mantelmedium ein Matrixmedium (18) ist.

8. Sicherheitsdokument nach Anspruch 7, bei dem das Matrixmedium (18) zwischen zwei oder mehreren Schichten des Sicherheitsdokuments eingebettet ist.

9. Sicherheitsdokument nach Anspruch 7 oder 8, bei dem das Matrixmedium (18) das Textilerzeugnis eines Substrats auf Polymergrundlage oder auf Papiergrundlage ist.

10. Sicherheitsdokument nach Anspruch 7 oder 8, bei dem das Matrixmedium (18) die Druckerfarbe auf einem Substrat ist.

11. Sicherheitsdokument nach einem der Ansprüche 1 bis 10, bei dem das Sicherheitsdokument eine Banknote ist, die ein Substrat auf Polymergrundlage oder auf Papiergrundlage umfasst.

12. Sicherheitsdokument nach einem der Ansprüche 1 bis 10, bei dem das Sicherheitsdokument ein Blatt Papier ist.

13. Sicherheitsdokument nach einem der Ansprüche 1 bis 12, bei dem unterschiedliche Orte des Sicherheitsdokuments mit einer Materialschicht (18) versehen sind, der mikrospherische Einschlüsse (22) beigemischt sind.

14. Sicherheitsdokument nach Anspruch 13, bei dem die Orte des Sicherheitsdokuments, die eine Materialschicht (18) mit mikrospherischen Einschlüssen (22) umfassen, in unterschiedlichen Ausmaßen modifiziert sind, wobei sie spezifische Konfigurationen von mikrospherischen Einschlüssen (22) aufweisen.

15. Sicherheitsdokument nach Anspruch 14, bei dem die Orte des Sicherheitsdokuments, die eine Materialschicht (18) mit mikrospherischen Einschlüssen (22) umfassen, mit unterschiedlichen Mustern versehen sind.

16. Sicherheitsdokument nach einem der Ansprüche 1 bis 15, **dadurch gekennzeichnet, dass** die mikrospherischen Einschlüsse (22) mit Feststoffieilchen gemischt sind, um für die mikrospherischen Einschlüsse (22) eine Schutzumgebung vorzusehen und um die Lebensdauer des Sicherheitsdokuments zu erhöhen.

17. Verfahren zum Überwachen der Identifizierung und/oder Authentisierung von Sicherheitsdokumenten nach einem der Ansprüche 1 bis 16:
wobei die mikrospherischen Einschlüsse (22) Ultraschall (24) ausgesetzt werden, und
die Reaktion (28; 30) der mikrospherischen Einschlüsse (22) auf die Ultraschallexposition erfasst wird.

18. Verfahren nach Anspruch 17, bei dem die Reaktion (28; 30) der mikrospherischen Einschlüsse (22) auf die Ultraschallexposition (24) durch Messen der Oberwellenerzeugung (26) aus den pulsierenden mikrospherischen Einschlüssen (22) überwacht wird.

19. Verfahren nach Anspruch 17, bei dem die Reaktion (28; 30) der mikrospherischen Einschlüsse (22) auf die Ultraschallexposition (24) durch Messen des Impuls-Echos (28) oder/und der Durchgangstransmission (30) einer einfallenden Schallwelle (24) überwacht wird.

20. Verfahren nach Anspruch 19, bei dem die erfasste Reaktion (28; 30) der mikrospherischen Einschlüsse (22) mit jenen von Referenzproben mit vorgegebenen Mustern für die Identifizierung
und/oder
Authentisierung des Sicherheitsdokuments und/oder Beurteilung der Qualität der mikrospherischen Einschlüsse (22) verglichen wird.

21. Verfahren nach einem der Ansprüche 17 bis 20, bei dem die mikrospherischen Einschlüsse (22) statisch unter Verwendung einer feststehenden Platte (36) Ultraschall (24) ausgesetzt werden.

22. Verfahren nach einem der Ansprüche 17 bis 20, bei dem die mikrospherischen Einschlüsse (22) dynamisch Ultraschall (24) ausgesetzt werden, während sich das Sicherheitsdokument bewegt.

23. Verfahren nach einem der Ansprüche 17 bis 22, bei dem ein Mehrfach-Erregungs-/Erfassungssystem (50) vorgesehen ist, um die Identifizierung und/oder Authentisierung der mikrospherischen Einschlüsse (22) unterschiedlicher Orte des Sicherheitsdokuments unter Verwendung mehr als eines Schallwandlers (32) zur Bereitstellung von Resonanzen bei unterschiedlichen Frequenzen zur gleichen Zeit gemäß den unterschiedlichen Konfigurationen der mikrospherischen Einschlüsse (22) innerhalb der Orte des Sicherheitsdokuments gleichzeitig zu überwachen.

## Revendications

1. Document de sécurité comprenant des attributs de sécurité, lesdits attributs de sécurité étant des inclusions de microsphères (22) disposées dans le document de sécurité, lesdites inclusions de microsphères (22) ayant une réponse acoustique prédéterminée à une exposition ultrasonore, **caractérisé en ce que** lesdites inclusions de microsphères (22) contiennent un milieu central qui est liquide ou gazeux.

2. Document de sécurité selon la revendication 1, dans lequel lesdites inclusions de microsphères (22) sont fournies par une couche de matériau (18) dopé avec des inclusions de microsphères (22) de différentes tailles comprenant un milieu central enveloppé par un milieu de coque.

3. Document de sécurité selon la revendication 2, dans lequel lesdites inclusions de microsphères (22) sont fournies avec une répartition de taille prédéterminée dans ladite couche de matériau (18).

4. Document de sécurité selon la revendication 2 ou 3, dans lequel lesdites inclusions de microsphères (22) sont fournies avec un positionnement spatial prédéterminé dans ladite couche de matériau (18).

5. Document de sécurité selon l'une quelconque des revendications 2 à 4, dans lequel lesdites inclusions de microsphères (22) sont fournies avec une concentration prédéterminée dans ladite couche de matériau (18).

6. Document de sécurité selon l'une quelconque des revendications 1 à 5, dans lequel des inclusions de microsphères reproductibles (22) sont fournies.

7. Document de sécurité selon l'une quelconque des revendications 2 à 6, dans lequel ledit milieu de coque est un milieu de matrice (18).

8. Document de sécurité selon la revendication 7, dans lequel ledit milieu de matrice (18) est enrobé entre deux couches ou plus du document de sécurité.

9. Document de sécurité selon la revendication 7 ou 8, dans lequel ledit milieu de matrice (18) est la structure d'un substrat à base de polymère ou à base de papier.

10. Document de sécurité selon la revendication 7 ou 8, dans lequel ledit milieu de matrice (18) est l'encre sur un substrat.

11. Document de sécurité selon l'une quelconque des revendications 1 à 10, dans lequel ledit document de sécurité est un billet de banque comprenant un substrat à base de polymère ou à base de papier.

12. Document de sécurité selon l'une quelconque des revendications 1 à 10, dans lequel ledit document de sécurité est une feuille de papier.

13. Document de sécurité selon l'une quelconque des revendications 1 à 12, dans lequel différents emplacements dudit document de sécurité sont pourvus d'une couche de matériau (18) dopé avec des inclusions de microsphères (22).

14. Document de sécurité selon la revendication 13, dans lequel lesdits emplacements du document de sécurité, comprenant une couche de matériau (18) avec des inclusions de microsphères (22), sont modifiés à différents degrés, en ayant des configurations spécifiques d'inclusion de microsphères (22).

15. Document de sécurité selon la revendication 14, dans lequel lesdits emplacements du document de sécurité, comprenant une couche de matériau (18) avec des inclusions de microsphères (22), sont pourvus de différents motifs.

16. Document de sécurité selon l'une quelconque des revendications 1 à 15, **caractérisé en ce que** les inclusions de microsphères (22) sont mélangées avec des particules solides pour fournir un environnement protecteur aux inclusions de microsphères (22) et accroître la durée d'utilisation du document de sécurité.

17. Procédé de vérification de l'identité et/ou de l'authenticité de documents de sécurité selon l'une quelconque des revendications 1 à 16 :
exposer les inclusions de microsphères (22) à des ultrasons (24), et
détecter la réponse (28 ; 30) des inclusions de microsphères (22) à l'exposition ultrasonore (24).

18. Procédé selon la revendication 17, dans lequel la réponse (28 ; 30) des inclusions de microsphères (22) à l'exposition ultrasonore (24) est vérifiée par la mesure de la production harmonique (26) issue des pulsations des inclusions de microsphères (22).

19. Procédé selon la revendication 17, dans lequel la réponse (28 ; 30) des inclusions de microsphères (22) à l'exposition ultrasonore (24) est vérifiée par la mesure de l'écho d'impulsion (28) et/ou de la transmission directe (30) d'une onde acoustique incidente (24).

20. Procédé selon la revendication 19, dans lequel la réponse détectée (28 ; 30) des inclusions de microsphères (22) est comparée à celles d'échantillons de référence ayant des motifs prédéterminés pour identifier et/ou authentifier le document de sécurité et/ou pour évaluer la qualité des inclusions de microsphères (22).

21. Procédé selon l'une quelconque des revendications 17 à 20, dans lequel lesdites inclusions de microsphères (22) sont exposées à des ultrasons (24) de manière statique au moyen d'une plaque statique (36).

22. Procédé selon l'une quelconque des revendications 17 à 20, dans lequel lesdites inclusions de microsphères (22) sont exposées à des ultrasons (24) de manière dynamique tandis que le document de sécurité se déplace.

23. Procédé selon l'une quelconque des revendications 17 à 22, dans lequel un système à excitation/détection multiple (50) est fourni pour vérifier l'identité et/ou l'authenticité des inclusions de microsphères (22) de différents emplacements du document de sécurité de manière simultanée, au moyen de plusieurs transducteurs (32) pour fournir des résonances à différentes fréquences en même temps, selon les différentes configurations des inclusions de microsphères (22) dans lesdits emplacements du document de sécurité.
